# EUROPEAN PATENT APPLICATION

(11) **EP 0 823 706 A1**
(43) Date of publication of application: **11.02.1998**
(21) Application number: 97112996.0
(22) Date of filing: 29.07.1997
(51) Int. Cl.: G11B 7/24, C04B 35/486

(54) **Zirconia ceramic as a digital storage media**

(30) Priority: 09.08.1996 US 694888
(71) Applicant: EASTMAN KODAK COMPANY, Rochester, New York 14650-2201 (US)
(72) Inventor: Ghosh, Syamal Kumar, c/o Eastman Kodak Company, Rochester, New York 14650-2201 (US); Chatterjee, Dilip Kumar, c/o Eastman Kodak Company, Rochester, New York 14650-2201 (US); Shaffer, Wayne Kenneth, c/o Eastman Kodak Company, Rochester, New York 14650-2201 (US)
(74) Representative: Wagner, Karl H., Dipl.-Ing.

(57) **Abstract**

An improved computer type data storage disk is formed using a ceramic material incorporating zirconium oxide mixed with a secondary oxide such as yttria in a range of approximately 0.5 through 5 mol%. The process of forming the ceramic data storage disk comprises the steps of:
(a) providing a ceramic powder, comprised of a particulate zirconium oxide and a secondary oxide selected from the group consisting of yttria, magnesia, and calcia wherein the secondary oxide, in the case of yttria or calcia has a range mole percent of about 0.5 to about 5 and if magnesia has a range mole percent of about 0.1 to about 1.0 relative to the total of zirconium oxide;
(b) providing a mold for receiving and processing the ceramic powder;
(c) compacting the ceramic powder in the mold to form a ceramic disk;
(d) sintering the ceramic disk thereby forming a sintered ceramic disk; and
(e) further shaping the sintered ceramic disk to form the finished ceramic data storage disk.

## Description

### FIELD OF THE INVENTION

The invention relates generally to the field of computer storage media, and in particular to a zirconia ceramic which is used to store digital information.

This invention relates to an optical data storage medium such as a tough ceramic optical disk on or from which digital information is optically written or read by a laser beam.

### BACKGROUND OF THE INVENTION

In the computer arts, specifically in the art of data storage, digital information is stored on disks that are either magnetic, magneto-optical, or optical. The digital information is retrieved from the magneto-optical and optical medium by detecting the reflectance, or the lack thereof, of a laser beam directed to the surface of the storage media. In one method of manufacturing such medium, a disk blank is first formed using a transfer molding process. The side of the disk that is to receive the digital information is coated with a reflective layer by a physical vacuum deposition process. The digital information is stored using pits in the medium which pits do not reflect light or the intensity of the reflected beam is different and that difference in reflectivity is detected and is used to read the information. The information containing side of the blank disk as well as the reflective layer is overcoated with a protective layer. The reflective layer and the protective overcoat must be durable enough to provide the disk with an extended wear life.

It would be highly desirable to have an improved manufacturing process that required less steps and therefore less cost while providing a storage media of equal or better quality to that presently in existence.

Improved temperature and humidity stability is also desirable so as to eliminate warping and other undesirable physical variances.

Increasing the wear resistance of the media is also desirable for preserving the digital data from loss and for the elimination of the need for a protective layer.

### SUMMARY OF THE INVENTION

The present invention is directed to overcoming one or more of the problems set forth above. Briefly summarized, according to one aspect of the present invention there is provided an improved computer type data storage disk that is formed using a ceramic material incorporating zirconium oxide mixed with a secondary oxide such as yttria in a range of approximately 0.5 through 5 mol%. The method for forming the ceramic data storage disk comprises the steps of:
(a) providing a ceramic powder, comprised of a particulate zirconium oxide and a secondary oxide selected from the group consisting of yttria, magnesia, and calcia wherein the secondary oxide, in the case of yttria or calcia the range mole percent is about 0.5 to about 5 and if magnesia is selected the range of mole percent is about 0.1 to about 1.0 relative to the total of said zirconium oxide;
(b) providing a mold for receiving and processing said ceramic powder;
(c) compacting the ceramic powder in the mold to form a ceramic disk;
(d) sintering the ceramic disk thereby forming a sintered ceramic disk; and
(e) further shaping the sintered ceramic disk to form the finished ceramic data storage disk.

This invention relates to a novel zirconia ceramic which can be used to store digital information. Either a Nd:YAG or Ar a laser may be used to write the information onto the ceramic disk and IR laser diodes may be used to retrieve (read) the information. Zirconia ceramic may be white or black and can be fabricated by sintering at 1400-1500°C.

From the foregoing it can be seen that it is a primary object of the present invention to provide an improved digital information storage media.

It is another object of the present invention to provide a digital information storage media that requires less processing steps to manufacture and that possesses improved temperature stability along with improved durability. This invention relates more particularly to tough tetragonal zirconia ceramic, either in bulk or in the form of a coating, as the medium for storing digitized information. In the case of the bulk ceramic disk, a monochromatic light source such as a Nd:YAG laser (1.06 µm) is used to write the digital information on the zirconia disk. The laser beam turns the white zirconia black at the point of intercept.

These and other aspects, objects, features, and advantages of the present invention will be more clearly understood and appreciated from a review of the following detailed description of the preferred embodiments and appended claims, and by reference to the accompanying drawings.

### Advantageous Effect Of The Invention

The present invention has the following advantages:
1. The storage media is a tough and durable material.
2. Temperature and humidity will not have any detrimental effect on the zirconia disk.
3. The zirconia disk is a low cost effective disk to manufacture since multilayer photosensitive and reflective coatings are eliminated from the manufacturing process.
4. The zirconia disk can be rendered erasable or reusable.

### BRIEF DESCRIPTION OF THE DRAWINGS

Fig. 1 is a flow diagram illustrating the preferred process steps used to manufacture the disk of Fig. 2;
Fig. 2 is a perspective view of a disk manufactured in accordance with the process of Fig. 1;
Figs. 3A and 3B are a sectioned view and a top sectioned view, respectively, taken along the section line 3-3 in Fig. 2 of a disk formed with a white zirconia; and
Figs 4A and 4B are a sectioned view and a top sectioned view, respectively, taken along the section line 3-3 in Fig. 2 of a disk formed with a black zirconia.

To facilitate understanding, identical reference numerals have been used, where possible, to designate identical elements that are common to the figures.

### DETAILED DESCRIPTION OF THE INVENTION

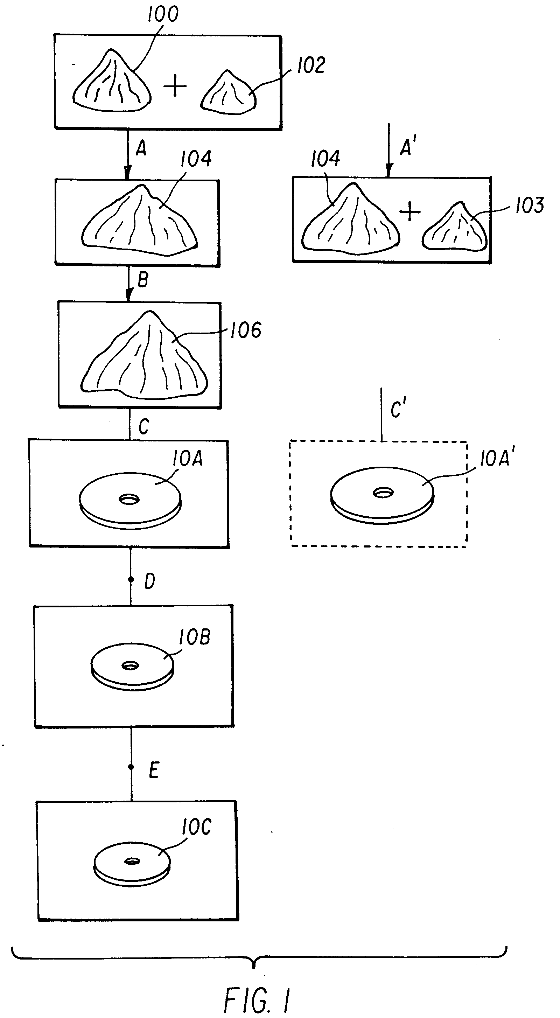

Referring to Fig. 1, a disk 10A, which in the ceramic arts may be referred to as a green part, is molded from a zirconia powder 100, combined with one or more secondary oxide powders 102, for example, yttria, magnesia, and/or calcia to provide a particulate of zirconia alloy powder 104. If yttria or calcia is selected the range mole percent is about 0.5-5. For magnesia the range of mole percent is about 0.1 to about 1.0. The next process step adds a desired binder to form a powder 106. The process of adding the desired binder is disclosed in detail in U. S. Patent No. 5,411,690, entitled "Process for Producing a Tetragonal Phase Zirconia Ceramic" by Ghosh et al. Alternately, the particulate zirconia alloy 104 may be mixed with a particulate aluminum oxide 103 to reduce weight and disk material costs. The mixing can be mechanical or alternatively it can be chemical, for example, mixing by co-precipitation. The powder 106 is compacted into the disk 10A by means of a die press or the like. The resultant powder mix 106 should be compacted by applying a uniform compacting force to the powder in order to produce a disk having a uniform density. A preferred compacting device that achieves uniform compacting forces is a floating mold die press.

An alternate disk 10A' (green part) can be formed by an injection molding process by first utilizing a compounding process on the powder mixture 106 which compounding process is accomplished by mixing about 20 percent by weight paraffin at a temperature above the glass transition temperature of the paraffin. The green disk is debinded at a temperature of 200 to 300 degrees centigrade for approximately 12 hours to remove most of the paraffin binders.

The disk 10B is formed by sintering either disk 10A or disk 10A' at 1500°C for 2 hours (see U.S. Patent No. 5,411,690 by Ghosh et al., for details on the fabrication of tetragonal zirconia objects). The sintered disk 10B is then ground and lapped to provide a disk 10C having a flat and reflective surface. Tracking grooves, if needed, are machined into the blank disk after sintering. Alternatively, tracking grooves can be molded in to the blank disk in the green stage prior to sintering. The tracks must be deep enough so that grinding and lapping operations, after the sintering process, do not remove those tracks. The flat, polished zirconia disk is the optical storage medium.

In an alternate embodiment of the invention a disk substrate made of glass, metal, or the like, may be inserted into the mod and the ceramic powder 106 placed over the substrate to provide a finished disk having the ceramic surface supported by the substrate.

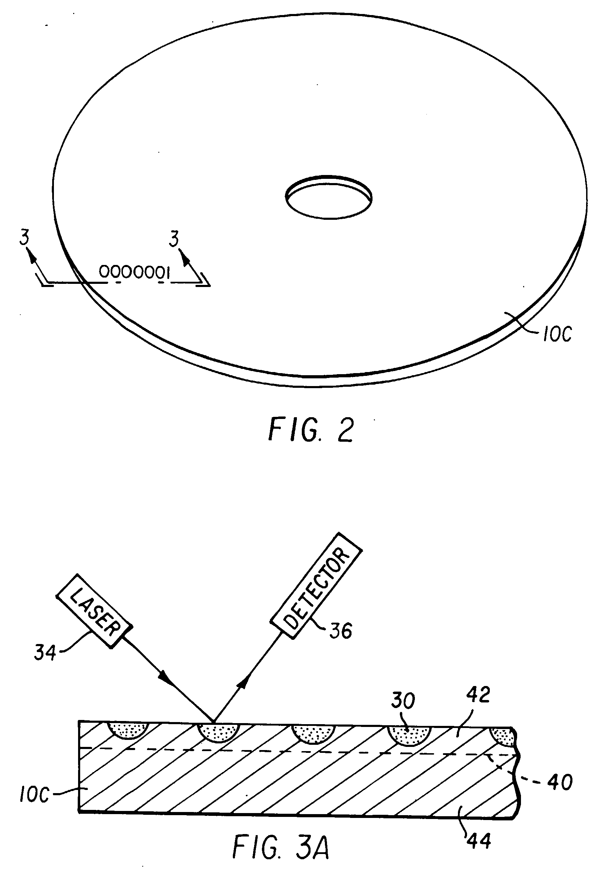

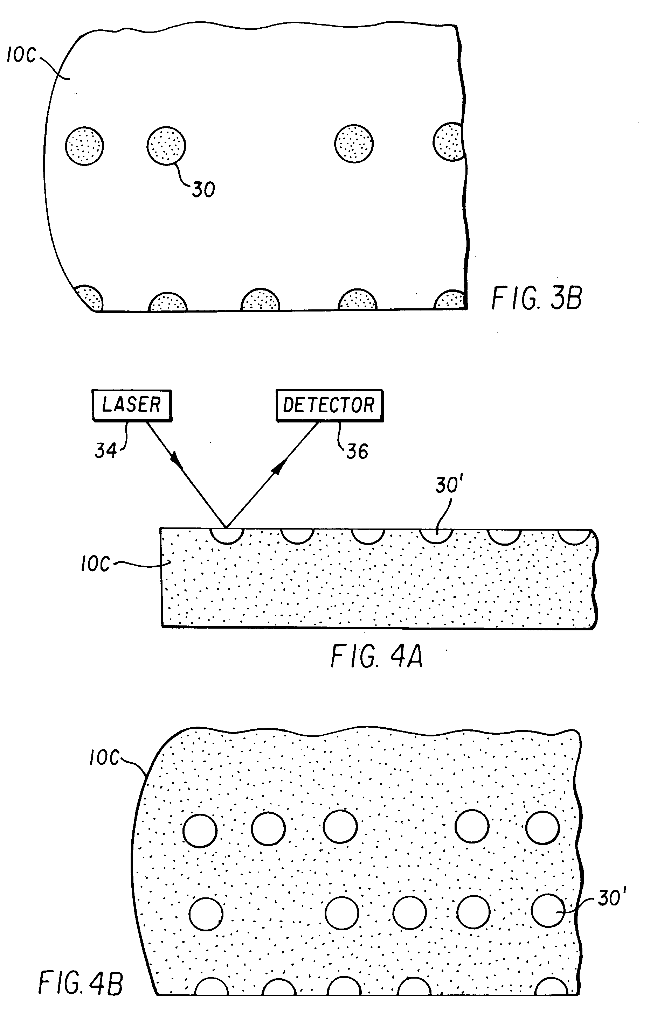

A disk 10C, manufactured in accordance with the preferred process of Fig. 1, is illustrated in Fig. 2 with a sectioned view taken along the section lines 3-3 being illustrated in Figs. 3A and 3B. Binary 0 and 1's are recorded into the surface of the disk by writing with a neodinyum YAG laser 34. The laser 34 performs the writing function by turning the white ceramic material into a black material denoted generally as a black dot 30 in Figs. 3A and 3B that extends slightly below the surface of the disk 10C where a binary 1, for example, is to be recorded. The absence of a black dot would then be read as a binary "0." The dot or spot size can be regulated using proper optics to be as small as 3 to 4 µm spot as shown in Figs. 3A-4B. The formed black spot will have a diameter approximately equal to that of the laser beam diameter. The side of the disk containing the dot is then overcoated (this step is optional) with a clear lacquer or polyurethane for protection. The data is read out by reducing the power to the laser 34 and positioning a detector 36 at the proper-angle of incidence to detect the laser beam that is reflected from the surface of the disk 10C. The difference in signal between the reflective white zirconia and the laser transformed black dots would enable the detector 36 to retrieve the digitized information. A semiconductor IR laser is sufficient enough to retrieve the information.

In an alternate embodiment of the ceramic disk 10C the disk may be formed with a substrate 44 of glass or metal joined at the dotted plane 40 to a layer of zirconia ceramic 42.

Referring now to Figs. 4A and 4B, in this embodiment of the invention the data storage disk is formed with a black ceramic material that turns white when exposed to a radiation source. White zirconia is made black by heating it to an elevated temperature, 1000°C or over, in a reducing (oxygen free) atmosphere. The depth of the black zirconia is determined by the temperature of the reducing atmosphere and the time of exposure to the atmosphere. It is possible to turn the disk black throughout by using a higher temperature, such as 1500°C and at least 2 hours of heating at that temperature. The black zirconia is sensitive to Ar laser radiation and will turn white instantaneously when exposed to form white dots 30'. The black zirconia disk is made the same way as the white zirconia disk described above. An Ar laser having a wavelength of 0.48µm is capable of generating dots as small as 1.5 µm as shown in Figs. 4A and 4B.

The dots 30 written on a white zirconia disk in the form of black dots can be erased using a CO₂ laser (10.6 µm). Alternatively, white dots 30' written on a black zirconia disk can be erased using a Nd:YAG laser.

In summary the present invention relates to use of a ceramic material formed as an information storage disk that can be written and or erased using state-of-the-art radiation sources.

The invention has been described with reference to a preferred embodiment; However, it will be appreciated that variations and modifications can be effected by a person of ordinary skill in the art without departing from the scope of the invention.

### PARTS LIST:

- 10A: disk
- 10A': alternate disk
- 10B: sintered disk
- 10C: disk
- 30: black dot
- 30': white dot
- 34: YAG laser
- 36: detector
- 40: dotted plane
- 42: layer of zirconia ceramic
- 44: substrate
- 100: zirconia powder
- 102: secondary oxide powder
- 103: particulate aluminum oxide
- 104: particulate of zirconia alloy powder
- 106: powder mix

## Claims

1. A recordable media comprised of a body of ceramic material incorporating zirconia in a range between approximately 0.5 through 5 mol% yttria.

2. The recordable material according to Claim 1 formed as a disk that is recorded on using a monochromatic radiation source of approximately 1.06 µm.

3. The recordable media according to Claim 1 that is processed by sintering in an neutral environment so as to form a black ceramic body.

4. The recordable media according to Claim 1 and further comprising a substrate onto which the body of ceramic material is found.

5. A data storage system comprising:
a zirconia disk adapted for rotation in a disk reader/writer; and
a radiation source for causing a reflective change on the zirconia disk corresponding to the data to be stored.

6. The data storage system according to Claim 5 and further comprising means for reading out the reflectance changes on the disk.

7. The data storage system according to Claim 5 wherein the zirconia disk is white and is turned black by a laser beam at each site where one level of binary data is recorded and remains white where the other level of binary data is to be recorded.

8. The data storage system according to Claim 5 wherein the zirconia disk is black and is turned white by a laser beam at each site where one level of binary data is recorded and remains black where the other level of binary data is to be recorded.

9. A method of forming a ceramic data storage disk, comprising the steps of:
(a) providing a ceramic powder, comprising particulate zirconium oxide and a secondary oxide selected from the group consisting of yttria, magnesia, and calcia wherein the secondary oxide, in the case of yttria or calcia is selected the range mole percent is about 0.5 to about 5 and if magnesia is selected the range of mole percent is about 0.1 to about 1.0 relative to the total of said zirconium oxide;
(b) providing a mold for receiving and processing said ceramic powder;
(c) compacting the ceramic powder in said mold to form a ceramic disk;
(d) sintering said ceramic disk thereby forming a sintered ceramic disk; and
(e) further shaping said sintered ceramic disk to form the finished ceramic data storage disk.

10. The method according to Claim 9 and further comprising the step of inserting a substrate into the mold with the ceramic powder prior to the compacting step C.
